# FASCICULE DE BREVET EUROPEEN

(11) **EP 1 332 900 B1**
(45) Date de publication et mention de la délivrance du brevet: **04.01.2006**
(21) Numéro de dépôt: 03290198.5
(22) Date de dépôt: 27.01.2003
(51) Int. Cl.: B60H 1/34, F24F 13/10

(54) **Aérateur, notamment pour véhicule automobile**
Luftausströmer, insbesondere eines Kraftfahrzeuges
Ventilator, particularly for motor vehicles

(30) Priorité: 30.01.2002 FR 0201094
(43) Date de publication de la demande: 06.08.2003
(73) Titulaire: Key Plastics International, 61130 Belleme (FR)
(72) Inventeur: Davril, Jean-Louis, 61400 Mortagne au Perche (FR)
(74) Mandataire: Lemoine, Robert

(56) Documents cités:
- EP-A- 0 094 479
- FR-A- 2 245 182
- FR-A- 2 792 256
- GB-A- 1 436 838
- US-A- 5 297 989

## Description

La présente invention concerne un aérateur, notamment pour véhicule automobile.

Les aérateurs des véhicules automobiles actuels, comme décrits dans FR 2 245 182, sont compliqués et chers, surtout lorsqu'ils permettent de régler avec précision le débit du flux d'air admis dans les véhicules et d'orienter ce flux d'air dans toutes les directions.

La présente invention se propose de remédier à ces inconvénients et, pour ce faire, elle a pour objet un aérateur, notamment pour véhicule automobile, qui comprend un corps cylindrique dont l'une des extrémités est pourvue d'une paroi transversale comportant des lumières séparées par des ponts de liaison, et un capot comportant un fond perforé qui est pourvu d'évidements séparés par des parties pleines et qui est situé devant la paroi transversale du corps cylindrique, le capot étant monté à rotation sur ce dernier et déplaçable entre une position extrême ouverte dans laquelle les lumières de la paroi transversale du corps cylindrique sont entièrement découvertes et une position extrême fermée dans laquelle lesdites lumières sont entièrement obturées.

Cet aérateur a une structure particulièrement simple, ce qui permet de le fabriquer facilement et avec un faible prix de revient. Le montage à rotation du capot sur le corps cylindrique a en outre l'avantage de permettre un réglage précis du débit du flux d'air admis dans le véhicule.

Le capot comporte une jupe recouvrant au moins partiellement le corps cylindrique tandis que des organes de retenue complémentaires sont respectivement prévus sur les surfaces en regard de la jupe et du corps cylindrique pour limiter l'angle de rotation du capot à une plage prédéterminée délimitée par les positions extrêmes ouverte et fermée.

Il suffit donc de saisir le capot par sa jupe et de le faire tourner sur le corps cylindrique pour le placer dans une position angulaire prédéterminée et régler avec précision le débit du flux d'air.

Les organes de retenue complémentaires peuvent comprendre au moins un ensemble constitué d'une rainure s'étendant dans un plan perpendiculaire à l'axe de rotation du capot et d'un téton faisant saillie dans la rainure.

La structure de ces organes est particulièrement simple, ce qui facilite les opérations de fabrication tout en réduisant les coûts.

De préférence, la rainure est située sur la jupe du capot tandis que le téton est situé sur le corps cylindrique.

Il est par ailleurs souhaitable que les évidements du fond perforé du capot aient des dimensions au plus égales à celles des lumières de la paroi transversale du corps cylindrique.

Ainsi, lorsque le capot est dans sa position extrême fermée, la circulation de l'air en direction de l'habitacle du véhicule est totalement interrompue et ne cause donc aucune gêne pour les passagers.

Selon un mode de réalisation préféré, l'aérateur selon l'invention comprend en outre un disque qui comporte des parties perforées séparées par des parties pleines et qui est interposé entre la paroi transversale du corps cylindrique et le fond perforé du capot, les parties pleines du disque étant entièrement recouvertes par les parties pleines du fond du capot lorsque celui-ci est dans la plage angulaire délimitée par la position extrême ouverte et une position centrale équidistante des positions extrêmes ouverte et fermée.

Selon ce mode de réalisation, les parties pleines du disque sont en outre entièrement découvertes lorsque le capot est dans la plage angulaire délimitée par la position extrême fermée et la position centrale.

La présence du disque permet d'augmenter les dimensions des lumières ménagées dans la paroi transversale du corps cylindrique et d'introduire dans l'habitacle du véhicule un plus grand volume d'air quand le capot est dans sa position extrême ouverte.

De préférence, le disque perforé et le capot comprennent des moyens d'accouplement complémentaires conçus de telle sorte que le disque est solidaire en rotation du capot lorsque celui-ci est déplacé de sa position extrême ouverte à sa position centrale ou de sa position extrême fermée à sa position centrale.

L'ouverture et la fermeture des lumières de la paroi transversale du corps cylindrique peuvent ainsi être assurées de façon progressive et en fonction de l'angle de rotation du capot, ce qui permet un réglage précis du débit du flux d'air admis dans l'habitacle du véhicule.

Les moyens d'accouplement complémentaires comprennent de préférence une protubérance radiale et une rainure circulaire situées l'une sur la surface interne du capot et l'autre sur le disque, la protubérance faisant saillie dans la rainure et venant en contact avec l'une des extrémités de celle-ci pendant le déplacement du capot de sa position extrême ouverte à sa position centrale ou de sa position extrême fermée à sa position centrale.

Ces moyens sont très simples de sorte que leur présence n'a pratiquement pas d'incidence sur le prix de revient de l'aérateur.

Afin d'assurer un fonctionnement sûr de l'aérateur, la paroi transversale du corps cylindrique et le disque comportent de préférence des organes d'arrêt complémentaires empêchant ledit disque de tourner avec le capot lorsque celui-ci est entraîné en rotation au-delà de sa position centrale.

Selon un mode d'exécution particulier, ces organes d'arrêt peuvent comprendre un renfoncement et un bossage circulaires situés l'un sur la paroi transversale du corps cylindrique et l'autre sur le disque, le disque ne pouvant tourner lorsque le bossage est appliqué contre l'une des extrémités du renfoncement.

Avantageusement, l'une au moins des parties pleines du fond perforé du capot comporte un rebord tourné vers l'intérieur et destiné à venir en contact avec l'un des ponts de liaison de la paroi transversale du corps cylindrique ou avec l'une des parties pleines du disque, si celui-ci existe, lorsque le capot parvient dans sa position extrême ouverte.

Le capot ne peut donc tourner au-delà de cette position lorsqu'une force de rotation continue à être exercée sur lui dans le sens correspondant à l'ouverture des lumières.

Selon une variante de réalisation, un déflecteur d'air peut être prévu à l'intérieur du corps cylindrique, ce déflecteur étant monté sur une tige de commande traversant axialement la paroi transversale du corps cylindrique, le disque lorsque celui-ci est présent et le fond perforé du capot, et comportant une rotule coopérant avec une surface sphérique située sur la paroi transversale du corps cylindrique.

Le flux d'air pénétrant dans l'habitacle du véhicule peut ainsi être orienté dans toutes les directions de l'espace, ce qui permet d'améliorer le confort des passagers.

Selon un mode de réalisation préféré, le déflecteur comprend au moins deux éléments cylindriques concentriques reliés par des entretoises radiales.

Afin de simplifier les opérations de fabrication, le déflecteur peut également comprendre un élément cylindrique central comportant un alésage axial dans lequel la tige est retenue par encliquetage.

Par ailleurs, pour assurer une diffusion uniforme de l'air pénétrant dans l'habitacle du véhicule, le fond perforé du capot est de préférence pourvu extérieurement d'un revêtement formant grille.

Deux modes d'exécution de la présente invention seront décrits ci-après à titre d'exemples nullement limitatifs en référence aux dessins annexés dans lesquels :
- la figure 1 est une vue schématique éclatée d'un aérateur selon un premier mode de réalisation ;
- la figure 2 est une vue de dessus de cet aérateur dont le capot est en position extrême ouverte, le déflecteur d'air étant omis pour plus de clarté ;
- la figure 3 est une vue analogue à la figure 2, mais montrant le capot en position extrême fermée ;
- la figure 4 est une schématique éclatée d'un aérateur selon un deuxième mode de réalisation ;
- la figure 5 est une vue selon la ligne V-V de la figure 4 et montre la partie intérieure du capot ;
- la figure 6 est une vue selon la ligne VI-VI de la figure 4 et montre la face du disque qui est dirigée vers l'intérieur du capot ;
- la figure 7 est une vue de dessus du corps cylindrique de l'aérateur ;
- la figure 8 est une vue de dessus de l'aérateur visible sur la figure 4, mais dont le déflecteur d'air n'est pas représenté pour plus de clarté, les lumières de la paroi transversale du corps cylindrique étant entièrement découvertes.
- la figure 9 est une vue analogue à la figure 8, mais montre les lumières à moitié obturées ; et
- la figure 10 est une vue analogue à la figure 8, mais montre les lumières entièrement obturées.

Les deux obturateurs que l'on peut voir sur les dessins sont destinés à introduire de l'air dans un habitacle de véhicule automobile.

Il va de soi cependant qu'ils pourraient équiper d'autres véhicules nécessitant une admission d'air pour améliorer le confort des passagers. Ils pourraient même être installés dans des pièces d'habitation ou des bureaux sans que l'on sorte pour autant du cadre de la présente invention.

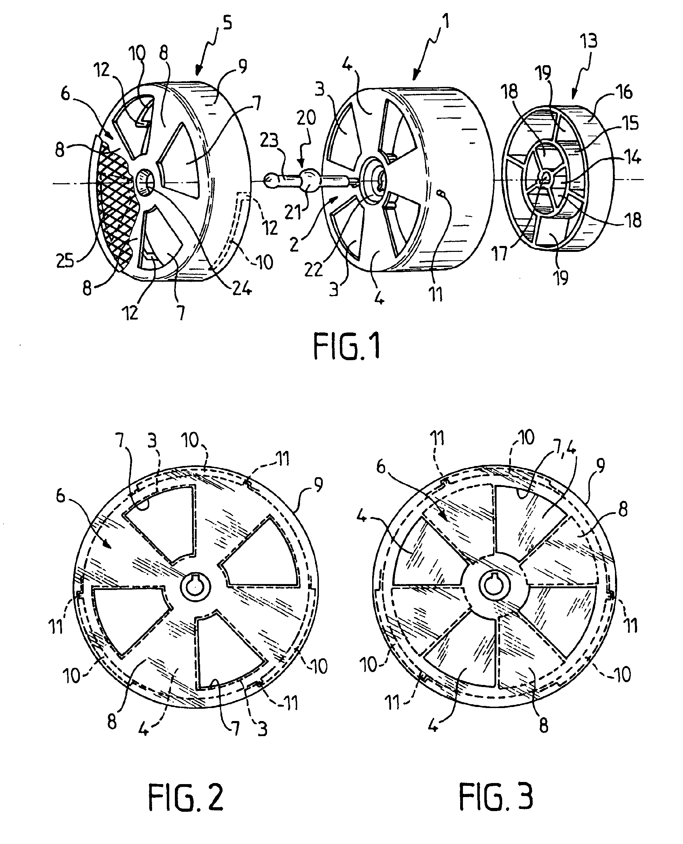

L'obturateur représenté sur les figures 1 à 3 comprend tout d'abord un corps cylindrique 1 dont l'une des extrémités est pourvue d'une paroi transversale 2 comportant des lumières 3 séparées par des ponts de liaison 4.

Il comprend également un capot 5 comportant un fond perforé 6 qui est pourvu d'évidements 7 séparés par des parties pleines 8 et qui est situé devant la paroi transversale du corps cylindrique 1.

Le capot 5 comporte un jupe 9 recouvrant partiellement le corps 1 et est monté à rotation sur ce dernier, entre une position extrême ouverte (visible sur la figure 2) dans laquelle les lumières 3 sont entièrement découvertes et une position extrême fermée (visible sur la figure 3) dans laquelle les lumières 3 sont entièrement obturées.

On notera ici que les évidements 7 du fond du capot 5 ont des dimensions au plus égales à celles des lumières 3 afin d'éviter que de l'air parvienne dans l'habitacle du véhicule lorsque le capot est dans sa position extrême fermée.

Des organes de retenue 10, 11 complémentaires sont respectivement prévus sur les surfaces en regard de la jupe 9 et du corps cylindrique 1.

Dans le mode de réalisation représenté, ces organes comprennent trois rainures ménagées dans la surface interne de la jupe du capot et trois tétons 11 faisant saillie sur la surface externe de la paroi latérale du corps 1.

Les rainures 10 sont équidistantes angulairement et s'étendent dans un plan perpendiculaire à l'axe de rotation du capot.

De même, les tétons 11 sont équidistants angulairement et s'étendent dans un plan perpendiculaire à l'axe longitudinal du corps cylindrique.

Les rainures 10 comportent, au niveau de l'une de leurs extrémités, un prolongement axial 12 débouchant du côté opposé au fond 6 du capot.

Grâce aux prolongements 12, les tétons 11 peuvent bien entendu être introduits très facilement dans leurs rainures respectives.

On notera par ailleurs que la longueur des rainures 10 est fixée pour que l'angle de rotation du capot 5 sur le corps cylindrique 1 soit limité à une plage prédéterminée dont les extrémités définissent les positions extrêmes ouverte et fermée.

L'aérateur qui vient d'être décrit comprend en outre un déflecteur d'air 13 situé à l'intérieur du corps cylindrique 1.

Le déflecteur 13 comprend un élément cylindrique central 14, un élément cylindrique intermédiaire 15 et un élément cylindrique extérieur 16.

L'élément central 14 comporte un alésage axial 17. Quant aux éléments intermédiaire et extérieur, ils sont concentriques et s'étendent coaxialement avec l'élément central. Dans l'exemple représenté, l'élément intermédiaire 15 est relié à l'élément central 14 par des entretoises radiales 18 tandis que l'élément extérieur 16 est relié à l'élément intermédiaire 15 par des entretoises radiales 19 décalées angulairement par rapport aux entretoises 18.

Le déflecteur 13 est monté sur une tige de commande 20 traversant axialement la paroi transversale 2 du corps cylindrique 1 et le fond perforé 6 du capot 5.

La tige 20 est retenue par encliquetage dans l'alésage 17 de l'élément central 14 et comporte dans sa partie médiane une rotule 21 coopérant d'une part avec une surface sphérique 22 située sur la face externe de la paroi transversale 2 du corps cylindrique et d'autre part avec la face interne du fond 6 du capot.

Elle se prolonge en outre à l'extérieur du capot par une partie 23 grâce à laquelle un utilisateur peut orienter le déflecteur 13 dans toutes les directions.

On notera ici que le fond 6 du capot est pourvu sur sa face externe d'un orifice central tronconique 24 grâce auquel la partie 23 de la tige 20 peut être facilement inclinée par rapport à l'axe longitudinal de l'aérateur afin de positionner le déflecteur dans une position prédéterminée.

Selon une variante de réalisation préférée, le fond 6 du capot peut être pourvu extérieurement d'un revêtement formant grille 25, ce revêtement n'étant représenté que partiellement sur la figure 1.

Le revêtement formant grille a pour avantage de permettre une meilleure diffusion de l'air à sa sortie de l'aérateur et d'améliorer l'esthétique de ce dernier en dissimulant les lumières 3 du corps cylindrique et les évidements 7 du capot.

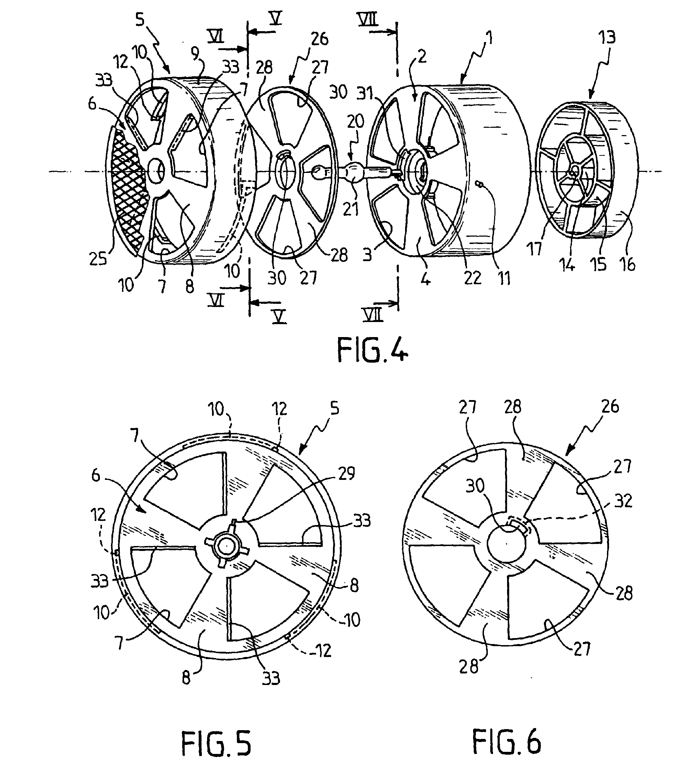

L'obturateur représenté sur les figures 4 à 10 présente de nombreuses similitudes avec celui qui vient d'être décrit et, pour des raisons de simplification, les références mentionnées sur les figures 1 à 3 seront reprises sur les figures 4 à 10 pour désigner les parties communes aux deux obturateurs.

En fait, le deuxième obturateur qui sera décrit ci-après comprend un disque 26 interposé entre la paroi transversale 2 du corps cylindrique et le fond perforé 6 du capot 5.

Le disque 26 comporte des parties perforées 27 séparées par des parties pleines 28 et dont les dimensions sont le double de celles de ces dernières.

Les parties perforées 27 du disque ont des dimensions identiques ou pratiquement identiques à celles des lumières 3 de la paroi transversale 2 du corps cylindrique 1 et à celles des évidements 7 du fond du capot 5.

Quant aux parties pleines 28, elles ont des dimensions identiques ou pratiquement identiques à celles des ponts de liaison 4 de la paroi transversale 2 du corps cylindrique 1 et à celles des parties pleines 8 du fond du capot 5.

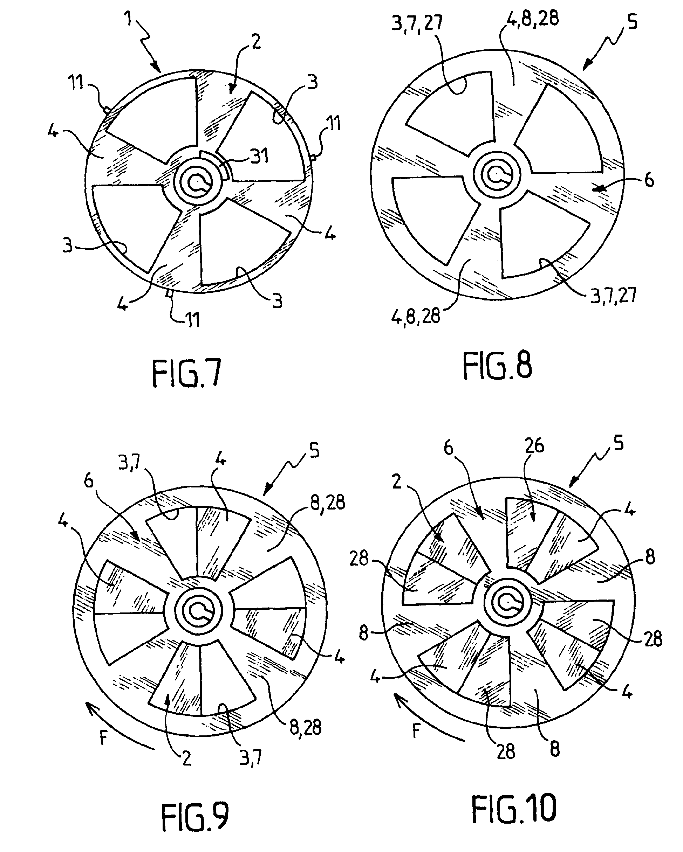

Les parties pleines 28 du disque sont entièrement recouvertes par les parties pleines 8 du fond du capot 5 lorsque celui-ci est dans la plage angulaire délimitée par sa position extrême ouverte visible sur la figure 8 et sa position extrême centrale qui est équidistante de ses positions extrêmes ouverte et fermée et qui est visible sur la figure 9.

En revanche, les parties pleines 28 du disque sont entièrement découvertes lorsque le capot 5 est dans la plage angulaire délimitée par sa position extrême fermée visible sur la figure 10 et sa position centrale visible sur la figure 9.

En se référant en particulier aux figures 5 et 6, on remarquera que le capot 5 comporte sur sa surface interne une protubérance radiale 29 tandis que le disque 26 comporte sur sa face tournée vers le capot une rainure circulaire 30 recevant la protubérance radiale 29.

La rainure 30 a une longueur prédéterminée pour que la protubérance radiale 29 vienne en contact avec l'une de ses extrémités pendant le déplacement du capot de sa position extrême ouverte visible sur la figure 8 à sa position centrale visible sur la figure 9.

Ainsi, lorsque le capot est entraîné en rotation de sa position extrême ouverte à sa position centrale, il entraîne avec lui le disque 26 qui reste donc invisible.

En se référant maintenant aux figures 4, 6 et 7, on notera que la paroi transversale 2 du corps cylindrique comporte, sur sa face tournée vers le disque 26 un renfoncement circulaire 31 tandis que le disque 26 comporte sur sa face tournée vers le corps cylindrique un bossage circulaire 32 logé dans le renfoncement circulaire 31.

Le renfoncement 31 et le bossage 32 sont destinés à empêcher le disque 26 de tourner avec le capot 5 lorsque celui-ci est entraîné en rotation au-delà de sa position centrale. Leurs longueurs respectives sont en effet choisies pour que le bossage 32 vienne en contre l'une des extrémités du renfoncement 31 et empêche ainsi le disque 26 de tourner avec le capot lorsque celui-ci, une fois dans sa position centrale, continue à être entraîné en rotation vers sa position extrême fermée.

En se référant plus particulièrement à la figure 5, on remarquera par ailleurs que les parties pleines 8 du fond 6 du capot comportent un rebord 33 faisant saillie le long de l'un de leurs côtés radiaux.

Ces rebords 33 sont destinés à venir en contact avec l'un des côtés radiaux des parties pleines du disque 26 lorsque le capot parvient dans sa position extrême ouverte et à empêcher ce dernier de tourner au-delà de cette position.

L'aérateur visible sur les figures 4 à 10 comporte également un déflecteur d'air 13 pourvu d'une tige 20 traversant axialement la paroi transversale 2 du corps 1, le disque 26 et le fond 6 du capot 5.

La rotule 21 de la tige 20 coopère ici encore avec la surface sphérique 22 de la paroi transversale 2 du corps cylindrique et la face interne du fond 6 du capot. Le disque 26 comporte en effet un orifice central suffisamment grand pour qu'elle puisse librement le traverser.

Enfin, pour augmenter la diffusion de l'air et l'esthétique de l'aérateur, le fond 6 du capot 5 peut être pourvu extérieurement d'un revêtement formant grille 25.

Les aérateurs qui viennent d'être décrits sont très faciles à utiliser.

Ainsi, dans le cas de l'aérateur représenté sur les figures 4 à 10, l'utilisateur fermera les lumières 3 de la paroi transversale 2 du corps cylindrique 1 en faisant tourner le capot 5 dans le sens des flèches F indiquées sur les figures 9 et 10.

Lorsque le capot 5 commence à tourner à partir de sa position extrême ouverte visible sur la figure 8, il entraîne avec lui le disque 26 (qui demeure invisible) de sorte que les ponts de liaison 4 de la paroi transversale 2 du corps 1 deviennent visibles.

Les ponts 4 sont entièrement visibles lorsque le capot arrive dans sa position médiane représentée sur la figure 9.

Puis, lorsque le capot tourne au-delà de sa position médiane, le disque 26 s'immobilise tandis que ses parties pleines 28 deviennent visibles.

Les parties pleines 28 sont entièrement visibles lorsque le capot arrive dans sa position extrême fermée visible sur la figure 10.

Pour ouvrir les lumières 3 de la paroi transversale 2 du corps cylindrique 1, il suffit maintenant de faire tourner le capot en sens inverse.

Le capot entraîne d'abord avec lui le disque 26 jusqu'à ce qu'il vienne dans sa position médiane. Dans cette position, les parties pleines 28 du disque demeurent visibles et recouvrent donc les ponts de liaison 4 de la paroi transversale 2 du corps 1.

Puis, lorsque le capot dépasse sa position médiane, le disque 26 s'immobilise et disparaît sous les parties pleines 8.

## Revendications

1. Aérateur, notamment pour véhicule automobile, comprenant un corps cylindrique (1) dont l'une des extrémités est pourvue d'une paroi transversale (2) comportant des lumières (3) séparées par des ponts de liaison (4), et un élément rotatif (5) comportant un fond perforé (6) qui est pourvu d'évidements (7) séparés par des parties pleines (8) et qui est situé devant la paroi transversale du corps (1), l'élément (5) étant monté sur ce dernier de façon à pouvoir être entraîné en rotation entre une position extrême ouverte dans laquelle les lumières (3) de la paroi transversale (2) du corps cylindrique (1) sont entièrement découvertes et une position extrême fermée dans laquelle lesdites lumières sont entièrement obturées, **caractérisé en ce que** l'élément rotatif (5) est un capot comportant une jupe (9) recouvrant au moins partiellement le corps cylindrique (1), des organes de retenue (10, 11) complémentaires étant respectivement prévus sur les surfaces en regard de la jupe (9) et du corps cylindrique (1) pour limiter l'angle de rotation du capot (5) à une plage prédéterminée délimitée par les positions extrêmes ouverte et fermée.

2. Aérateur selon la revendication 1, **caractérisé en ce que** les organes de retenue (10, 11) complémentaires comprennent au moins un ensemble constitué d'une rainure (10) s'étendant dans un plan perpendiculaire à l'axe de rotation du capot (5) et d'un téton (11) faisant saillie dans la rainure.

3. Aérateur selon la revendication 2, **caractérisé en ce que** la rainure (10) est située sur la jupe (9) du capot (5) tandis que le téton est situé sur le corps cylindrique (1).

4. Aérateur selon l'une quelconque des revendications 1 à 3, **caractérisé en ce que** les évidements (7) du fond perforé (6) du capot (5) ont des dimensions au plus égales à celles des lumières (3) de la paroi transversale (2) du corps cylindrique (1).

5. Aérateur selon l'une quelconque des revendications 1 à 3, **caractérisé en ce qu'**il comprend en outre un disque (26) qui comporte des parties perforées (27) séparées par des parties pleines (28) et qui est interposé entre la paroi transversale (2) du corps cylindrique (1) et le fond perforé (6) du capot (5), les parties pleines (28) du disque (26) étant entièrement recouvertes par les parties pleines (8) du fond (6) du capot (5) lorsque celui-ci est dans la plage angulaire délimitée par la position extrême ouverte et une position centrale équidistante des positions extrêmes ouverte et fermée.

6. Aérateur selon la revendication 5, **caractérisé en ce que** les parties pleines (28) du disque (26) sont entièrement découvertes lorsque le capot (5) est dans la plage angulaire délimitée par la position extrême fermée et la position centrale.

7. Aérateur selon la revendication 5 ou 6, **caractérisé en ce que** le disque perforé (26) et le capot (5) comprennent des moyens d'accouplement (29, 30) complémentaires conçus de telle sorte que le disque (26) est solidaire en rotation du capot (5) lorsque celui-ci est déplacé de sa position extrême ouverte à sa position centrale ou de sa position extrême fermée à sa position centrale.

8. Aérateur selon la revendication 7, **caractérisé en ce que** les moyens d'accouplement (29, 30) complémentaires comprennent une protubérance (29) radiale et une rainure circulaire (30) situées l'une sur la surface interne du capot (5) et l'autre sur le disque (26), la protubérance (29) faisant saillie dans la rainure (30) et venant en contact avec l'une des extrémités de celle-ci pendant le déplacement du capot (5) de sa position extrême ouverte à sa position centrale ou de sa position extrême fermée à sa position centrale.

9. Aérateur selon l'une quelconque des revendications 5 à 8, **caractérisé en ce que** la paroi transversale (2) du corps cylindrique (1) et le disque (26) comportent des organes d'arrêt (31, 32) complémentaires empêchant ledit disque de tourner avec le capot (5) lorsque celui-ci est entraîné en rotation au-delà de sa position centrale.

10. Aérateur selon la revendication 9, **caractérisé en ce que** les organes d'arrêt (31, 32) comprennent un renfoncement (31) et un bossage (32) circulaire et situés l'un sur la paroi transversale du corps cylindrique (1) et l'autre sur le disque (26), le disque (26) ne pouvant tourner lorsque le bossage (32) est appliqué contre l'une des extrémités du renfoncement (31).

11. Aérateur selon l'une quelconque des revendications 1 à 10, **caractérisé en ce que** l'une au moins des parties pleines (8) du fond perforé (6) du capot (5) comporte un rebord (33) tourné vers l'intérieur et destiné à venir en contact avec l'un des ponts de liaison (4) de la paroi transversale (2) du corps cylindrique (1) ou avec l'une des parties pleines (28) du disque (26), si celui-ci existe, lorsque le capot (5) parvient dans sa position extrême ouverte.

12. Aérateur selon l'une quelconque des revendications précédentes, **caractérisé en ce qu'**un déflecteur d'air (13) est prévu à l'intérieur du corps cylindrique (1), ce déflecteur étant monté sur une tige de commande (20) traversant axialement la paroi transversale (2) du corps cylindrique (1), le disque (26) lorsque celui-ci est présent et le fond perforé (6) du capot (5), et comportant une rotule (21) coopérant avec une surface sphérique (22) située sur la paroi transversale (2) du corps cylindrique (1).

13. Aérateur selon la revendication 12, **caractérisé en ce que** le déflecteur (13) comprend au moins deux éléments cylindriques concentriques (15, 16) reliés par des entretoises radiales (18, 19).

14. Aérateur selon la revendication 12 ou 13, **caractérisé en ce que** le déflecteur (13) comprend un élément cylindrique central (14) comportant un alésage axial (17) dans lequel la tige (20) est retenue par encliquetage.

15. Aérateur selon l'une quelconque des revendications précédentes, **caractérisé en ce que** le fond perforé (6) du capot (5) est pourvu extérieurement d'un revêtement formant grille (25).

## Claims

1. A ventilator, particularly for motor vehicles, comprising a cylindrical body (1), one end of which is provided with a transverse wall (2) having openings (3) separated by bridges (4), and a rotary member (5) having a perforated bottom (6), which is provided with hollowed portions (7) separated by solid portions (8) and which is located in front of the transverse wall of the body (1), the member (5) being mounted on said body so as to be able to be rotationally driven between an open extreme position, in which the openings (3) of the transverse wall (2) of the cylindrical body (1) are entirely uncovered, and a closed extreme position, in which said openings are entirely shut, **characterized in that** the rotary member (5) is a cap comprising a skirt (9) covering at least partially the cylindrical body (1), mating retainers (10, 11) being provided on the opposed surfaces of the skirt (9) and cylindrical body (1), respectively, for limiting the angle of rotation of the cap (5) within a predetermined range delimited by the open and closed extreme positions.

2. The ventilator according to claim 1, **characterized in that** the mating retainers (10, 11) comprise at least one unit formed of a groove (10) extending in a plane perpendicular to the axis of rotation of the cap (5) and of a pin (11) projecting into the groove.

3. The ventilator according to claim 2, **characterized in that** the groove (10) is located on the skirt (9) of the cap (5), while the pin is located on the cylindrical body (1).

4. The ventilator according to any of claims 1 to 3, **characterized in that** the hollowed portions (7) of the perforated bottom (6) of the cap (5) have dimensions at most equal to those of the openings (3) of the transverse wall (2) of cylindrical body (1).

5. The ventilator according to any of claims 1 to 3, **characterized in that** it further comprises a disc (26), which has perforated portions (27) separated by solid portions (28) and which is interposed between the transverse wall (2) of the cylindrical body (1) and the perforated bottom (6) of the cap (5), the solid portions (28) of the disc (26) being entirely covered by the solid portions (8) of the bottom (6) of the cap (5) when said cap is within the angular range delimited by the open extreme position and a central position equidistant from the open and closed extreme positions.

6. The ventilator according to claim 5, **characterized in that** the solid portions (28) of the disc (26) are entirely uncovered when the cap (5) is within the angular range delimited by the closed extreme position and the central position.

7. The ventilator according to claim 5 or 6, **characterized in that** the perforated disc (26) and cap (5) comprise mating coupling means (29, 30), which are designed so that the disc (26) rotates integrally with the cap (5) when said cap is moved from its open extreme position to its central position or from its closed extreme position to its central position.

8. The ventilator according to claim 7, **characterized in that** the mating coupling means (29, 30) comprise a radial protrusion (29) and a circular groove (30), of which one is located on the inner surface of the cap (5) and the other is located on the disc (26), the protrusion (29) protruding into the groove (30) and coming into contact with one end thereof during the movement of the cap (5) from its open extreme position to its central position or from its closed extreme position to its central position.

9. The ventilator according to any of claims 5 to 8, **characterized in that** the transverse wall (2) of the cylindrical body (1) and the disc (26) comprise mating stop members (31, 32) preventing said disc from rotating with the cap (5) when said cap is rotated beyond its central position.

10. The ventilator according to claim 9, **characterized in that** the stop members (31, 32) comprise a recess (31) and a circular boss (32), of which one is located on the transverse wall of the cylindrical body (1) and the other is located on the disc (26), the disc (26) being prevented from rotating when the boss (32) is applied against one end of the recess (31).

11. The ventilator according to any of claims 1 to 10, **characterized in that** at least one of the solid portions (8) of the perforated bottom (6) of the cap (5) comprises a flange (33) facing to the inside and intended to come into contact with one of the bridges (4) of the transverse wall (2) of the cylindrical body (1) or with one of the solid portions (28) of the disc (26), if said disc exists, when the cap (5) reaches its open extreme position.

12. The ventilator according to any of the preceding claims, **characterized in that** an air deflector (13) is provided inside the cylindrical body (1), said deflector being mounted on a control rod (20) axially traversing the transverse wall (2) of the cylindrical body (1), the disc (26), when said disc exists, and the perforated bottom (6) of the cap (5), and comprising a ball joint (21), which cooperates with a spherical surface (22) located on the transverse wall (2) of the cylindrical body (1).

13. The ventilator according to claim 12, **characterized in that** the deflector (13) comprises at least two concentric cylindrical members (15, 16) interconnected by radial cross-members (18, 19).

14. The ventilator according to claim 12 or 13, **characterized in that** the deflector (13) comprises a central cylindrical member (14) having a central bore (17), in which the rod (20) is retained by snap fitting.

15. The ventilator according to any of the preceding claims, **characterized in that** the perforated bottom (6) of the cap (5) is provided externally with a grid forming coating (25).

## Patentansprüche

1. Lüfter, im Besonderen für Kraftfahrzeuge, umfassend einen zylindrischen Körper (1), von dem eines der Enden mit einer Querwand (2), die durch Verbindungsstege (4) getrennte Durchlässe (3) umfasst, ausgestattet ist, und ein Drehelement (5), das einen gelochten Boden (6), der mit Aussparungen (7), die durch vollwandige Teile (8) getrennt sind, ausgestattet ist und sich vor der Querwand des Körpers (1) befindet, umfasst, wobei das Element (5) an Letzterem so angebracht ist, dass es zwischen einer maximal geöffneten Position, in der die Durchlässe (3) der Querwand (2) des zylindrischen Körpers (1) vollständig offen sind, und einer maximal geschlossenen Position, in der die Durchlässe vollständig verschlossen sind, zur Drehung angetrieben werden kann, **dadurch gekennzeichnet, dass** das Drehelement (5) eine Haube ist, die eine Schürze (9), die wenigstens teilweise den zylindrischen Körper (1) abdeckt, umfasst, wobei jeweils zusätzliche Haltevorrichtungen (10, 11) an den Flächen in Bezug auf die Schürze (9) und den zylindrischen Körper (1) vorgesehen sind, um den Drehwinkel der Haube (5) auf einen vorbestimmten Bereich, der durch die maximal geöffnete und die maximal geschlossene Position begrenzt wird, zu beschränken.

2. Lüfter nach Anspruch 1, **dadurch gekennzeichnet, dass** die zusätzlichen Haltevorrichtungen (10, 11) wenigstens einen Satz bestehend aus einer Nut (10), die sich in einer ebenen Fläche senkrecht zur Drehachse der Haube (5) erstreckt, und aus einem Zapfen (11), der in die Nut vorsteht, umfassen.

3. Lüfter nach Anspruch 2, **dadurch gekennzeichnet, dass** sich die Nut (10) an der Schürze (9) der Haube (5) befindet, während sich der Zapfen an dem zylindrischen Körper (1) befindet.

4. Lüfter nach einem der Ansprüche 1 bis 3, **dadurch gekennzeichnet, dass** die Aussparungen (7) des gelochten Bodens (6) der Haube (5) Abmessungen aufweisen, die höchstens denjenigen der Durchlässe (3) der Querwand (2) des zylindrischen Körpers (1) entsprechen.

5. Lüfter nach einem der Ansprüche 1 bis 3, **dadurch gekennzeichnet, dass** er des Weiteren eine Scheibe (26) umfasst, die gelochte Teile (27), die durch vollwandige Teile (28) getrennt sind, umfasst und die zwischen der Querwand (2) des zylindrischen Körpers (1) und dem gelochten Boden (6) der Haube (5) angeordnet ist, wobei die vollwandigen Teile (28) der Scheibe (26) vollständig durch die vollwandigen Teile (8) des Bodens (6) der Haube (5) abgedeckt werden, wenn sich diese in dem Winkelbereich befindet, der durch die maximal geöffnete Position und eine mittige Position, die sich in gleichem Abstand zu der maximal geöffneten und der maximal geschlossenen Position befindet, begrenzt wird.

6. Lüfter nach Anspruch 5, **dadurch gekennzeichnet, dass** die vollwandigen Teile (28) der Scheibe (26) vollständig offen sind, wenn sich die Haube (5) in dem Winkelbereich, der durch die maximal geschlossene Position und die mittige Position begrenzt wird, befindet.

7. Lüfter nach Anspruch 5 oder 6, **dadurch gekennzeichnet, dass** die gelochte Scheibe (26) und die Haube (5) zusätzliche Kupplungseinrichtungen (29, 30) umfassen, die so konstruiert sind, dass sich die Scheibe (26) zusammen mit der Haube (5) dreht, wenn diese von ihrer maximal geöffneten Position zu ihrer mittigen Position oder von ihrer maximal geschlossenen Position zu ihrer mittigen Position bewegt wird.

8. Lüfter nach Anspruch 7, **dadurch gekennzeichnet, dass** die zusätzlichen Kupplungseinrichtungen (29, 30) eine radiale Ausbauchung (29) und eine kreisförmige.Nut (30) umfassen, wobei sich die eine auf der Innenfläche der Haube (5) und sich die andere an der Scheibe (26) befindet und die Ausbauchung (29) in die Nut (30) vorsteht und während der Bewegung der Haube (5) von ihrer maximal geöffneten Position zu ihrer mittigen Position oder von ihrer maximal geschlossenen Position zu ihrer mittigen Position mit einem der Enden der Nut in Kontakt gerät.

9. Lüfter nach einem der Ansprüche 5 bis 8, **dadurch gekennzeichnet, dass** die Querwand (2) des zylindrischen Körpers (1) und die Scheibe (26) zusätzliche Sperrvorrichtungen (31, 32) umfassen, die die Scheibe daran hindern, sich mit der Haube (5) zu drehen, wenn diese zur Drehung über ihre mittige Position hinaus angetrieben wird.

10. Lüfter nach Anspruch 9, **dadurch gekennzeichnet, dass** die Sperrvorrichtungen (31, 32) eine Vertiefung (31) und eine kreisförmige Erhöhung (32) umfassen, wobei sich die eine an der Querwand des zylindrischen Körpers (1) und die andere an der Scheibe (26) befindet und sich die Scheibe (26) nicht drehen kann, wenn die Erhöhung (32) gegen eines der Enden der Vertiefung (31) gedrückt wird.

11. Lüfter nach einem der Ansprüche 1 bis 10, **dadurch gekennzeichnet, dass** wenigstens einer der vollwandigen Teile (8) des gelochten Bodens (6) der Haube (5) einen Ansatz (33) umfasst, der nach innen gedreht ist und mit einem der Verbindungsstege (4) der Querwand (2) des zylindrischen Körpers (1) oder mit einem der vollwandigen Teile (28) der Scheibe (26), soweit diese vorhanden ist, in Kontakt geraten soll, wenn die Haube (5) ihre maximal geöffnete Position erreicht.

12. Lüfter nach einem der vorhergehenden Ansprüche, **dadurch gekennzeichnet, dass** eine Luftleitvorrichtung (13) im Inneren des zylindrischen Körpers (1) vorgesehen ist, wobei diese Leitvorrichtung an einer Steuerstange (20) angebracht ist, die sich axial durch die Querwand (2) des zylindrischen Körpers (1), die Scheibe (26), soweit diese vorhanden ist, und den gelochten Boden (6) der Haube (5) hindurch erstreckt und einen Kugelzapfen (21) umfasst, der mit einer kugelförmigen Fläche (22), die sich an der Querwand (2) des zylindrischen Körpers (1) befindet, zusammenwirkt.

13. Lüfter nach Anspruch 12, **dadurch gekennzeichnet, dass** die Leitvorrichtung (13) wenigstens zwei zylindrische konzentrische Elemente (15, 16), die durch radiale Abstandsstücke (18, 19) verbunden sind, umfasst.

14. Lüfter nach Anspruch 12 oder 13, **dadurch gekennzeichnet, dass** die Leitvorrichtung (13) ein zylindrisches mittiges Element (14) umfasst, das eine axiale Bohrung (17), in der die Stange (20) durch Einrastung gehalten wird, umfasst.

15. Lüfter nach einem der vorhergehenden Ansprüche, **dadurch gekennzeichnet, dass** der gelochte Boden (6) der Haube (5) außen mit einem gitterbildenden Mantel (25) ausgestattet ist.
